# EUROPÄISCHE PATENTSCHRIFT

(11) **EP 2 439 245 B1**
(45) Veröffentlichungstag und Bekanntmachung des Hinweises auf die Patenterteilung: **30.04.2014**
(21) Anmeldenummer: 11194561.4
(22) Anmeldetag: 04.03.2008
(51) Int. Cl.: C09D 11/00, C09D 11/02

(54) **Druckfarbe oder Drucklack für Lebensmittel-Verpackungen oder für Kontakteinrichtungen, welche in Kontakt mit Lebensmitteln kommen können**
Printing ink or printing varnish for foodstuff packaging or for contact devices coming in contact with foodstuffs
Couleur d'imprimerie ou laque d'imprimerie pour emballages d'aliments ou pour dispositifs de contact, lesquels peuvent entrer en contact avec des aliments

(30) Priorität: 06.03.2007 DE 102007012264
(43) Veröffentlichungstag der Anmeldung: 11.04.2012
(62) Teilanmeldung aus: 08717386.0
(73) Patentinhaber: Epple Druckfarben AG, 86356 Neusäss-Augsburg (DE)
(72) Erfinder: Eisele-Kohler, Artur, 86161 Augsburg (DE); Epple, Carl, 86150 Augsburg (DE)
(74) Vertreter: Hoeger, Stellrecht & Partner Patentanwälte

(56) Entgegenhaltungen:
- EP-A- 1 640 421
- WO-A-01/25340
- WO-A-2005/059046
- DE-A1- 19 653 828
- US-A1- 2005 099 475
- DATABASE WPI Week 200344 Thomson Scientific, London, GB; AN 2003-468763 XP002476840, & WO 03/044101 A (FAN G) 30. Mai 2003 (2003-05-30)

## Beschreibung

Die Erfindung betrifft eine Druckfarbe oder einen Drucklack für Lebensmittel-Verpackungen oder für Kontakteinrichtungen, welche in Kontakt mit Lebensmitteln kommen können, umfassend ein Bindemittel mit einem Harzbestandteil und einem Lösungsmittelbestandteil.

Bei Lebensmittel-Verpackungen werden in der Regel primäre Verpackungen und sekundäre Verpackungen unterschieden. Bei primären Verpackungen ist üblicherweise eine Außenseite der Verpackung bedruckt und das Lebensmittel, welches in der Verpackung aufgenommen ist, berührt eine der Außenseite gegenüberliegende Innenseite der Verpackung. Bei sekundären Verpackungen ist das Lebensmittel in einer zusätzlichen Umhüllung aufgenommen, welche in einer insbesondere auf der Außenseite bedruckten Verpackung positioniert ist.

Beispiele für Kontakteinrichtungen, welche in Kontakt mit Lebensmitteln kommen können und insbesondere in direkten Kontakt kommen können, sind Einleger in Lebensmittelverpackungen oder Unterlagen für Lebensmittel wie Tablettunterlagen.

Druckfarben-/Drucklackbestandteile können grundsätzlich durch die Verpackung hindurch zu dem Lebensmittel gelangen, insbesondere bei primären Verpackungen.

In der EP 0 886 671 B1 ist eine Offset-Druckfarbe beschrieben, die ein kolophoniummodifiziertes Phenolharz und/oder ein Maleinatharz und/oder ein modifiziertes Kohlenwasserstoffharz und/oder einen Kolophoniumharzester umfasst. Als Lösungsmittel für das/die Harze weist diese Offset-Druckfarbe einen oder mehrere wasserunlösliche Fettsäureester von mehrwertigen Alkoholen mit hohem sterischen Raumbedarf und/oder von Ethinolen auf, wobei die Ester sterische Abmessungen des Durchmessers von 2,0 bis 7,0 nm und des Volumens von 1,0 bis 21,0 nm³ aufweisen. Diese Offset-Druckfarbe wird als migrationsarm, geruchsarm und swellingarm beschrieben.

In dem Artikel "Spinat - und nur Spinat!" von Klaus-Peter Nicolay in Druckmarkt 40, Februar 2006, 30 - 32 sind migrationsarme Druckfarben mit der Bezeichnung MGA des Farbenherstellers Huber beschrieben. Diese trocknen nicht oxidativ und schlagen langsam weg. Es ist eine Inline-Lackierung mit Dispersionslack erforderlich.

In der Technischen Information 10.1.15/11.2006/Verpackungsdruck/Offset-Druck "MGA-CORONA^{®} 5045" der huber group sind ebenfalls migrationsarme, sensorisch neutrale Bogenoffsetfarben für die Herstellung von Lebensmittelverpackungen beschrieben. Diese Druckfarben enthalten ausschließlich Bestandteile mit minimalem Migrationspotential, um eine unerwünschte Wechselwirkung der Druckfarbe mit verpackten Lebensmitteln weitgehend zu verhindern. Diese Druckfarben trocknen nicht oxidativ und schlagen relativ langsam weg; es ist eine Inline-Lackierung mit Dispersionslack erforderlich. Bedruckstoffe mit geringem Saugvermögen erfordern den Einsatz spezieller Dispersionslacke. Ein Verzicht auf Inline-Lackierung hat Ablegen im Stapel zur Folge und die erforderliche Scheuerfestigkeit wird nicht erreicht.

Aus der US 5,178,672 ist eine Druckfarbe auf der Basis von Sojaöl bekannt.

In der US 2004/0086603 A1 ist eine essbare Tinte für einen Tintenstrahldrucker erwähnt.

Aus der DE 102 09 013 A1 ist eine Offset-Druckfarbe bekannt, welche Farbpigmente und ein Bindemittel für die Farbpigmente umfasst, wobei das Bindemittel mindestens eine epoxidierte organische Komponente umfasst.

In der WO 2005/059046 A1 ist ein Verfahren zur Herstellung einer Druckfarbenzusammensetzung bekannt, welche ein organisches Lösungsmittel umfasst.

Aus der US 2005/0099475 A1 ist eine Druckfarbe bekannt, welche einen fluoreszierenden Farbbestandteil aufweist.

Aus der EP 1 640 421 A1 ist eine unsichtbare, nicht-UV-fluoreszierende Farbe bekannt.

Aus der WO 01/25340 A1 ist eine Farbzusammensetzung bekannt, welche mindestens ein modifiziertes Pigmentprodukt umfasst.

Aus der DE 196 53 828 A1 ist eine Druckfarbe bekannt, die ein kolophoniummodifiziertes Phenolharz und/oder ein Maleinatharz und/oder ein modifiziertes Kohlenwasserstoffharz und/oder einen Kolophoniumharzester umfasst, wobei sie als Lösungsmittel für das/die Harze ein oder mehrere Fettsäureester von mehrwertigen Alkoholen mit hohem sterischen Raumbedarf und/oder von Ethinolen aufweist.

Der Erfindung liegt die Aufgabe zugrunde, eine Druckfarbe und einen Drucklack für Lebensmittel-Verpackungen der eingangs genannten Art bereitzustellen, welche auf einfache Weise einsetzbar ist.

Diese Aufgabe wird bei der eingangs genannten Druckfarbe oder dem eingangs genannten Drucklack erfindungsgemäß dadurch gelöst, dass der Lösungsmittelbestandteil des Bindemittels gesättigt ist und ein Diglycerid umfasst, welches ein Lebensmittel im Sinne des Artikels 2 der Verordnung (EG) Nr. 178/2002 oder ein Lebensmittel-Zusatzstoff gemäß § 2 Abs. 3 des Lebensmittel- und Futtermittelgesetzbuches ist.

Das Bindemittel besteht aus einem Harzbestandteil (mit einem oder mehreren Harzen) und einem Lösungsmittelbestandteil zur Lösung des Harzes. Bei Druckfarben wird ein für die Druckfarbenherstellung aufbereitetes Bindemittel für die Pigmente auch als Firnis bezeichnet.

Erfindungsgemäß ist der Lösungsmittelbestandteil des Bindemittels ein einkomponentiges oder mehrkomponentiges gesättigtes Lösungsmittel für das Harz, wobei das Lösungsmittel (wenn es einkomponentig ist) oder die Komponenten des Lösungsmittels (wenn das Lösungsmittel mehrkomponentig ist) ein Lebensmittel oder Lebensmittel-Zusatzstoff sind. Durch die Verwendung des gesättigten Lösungsmittelbestandteils der Druckfarbe bzw. des Drucklacks wird eine chemische Trocknung und insbesondere oxidative Trocknung der Druckfarbe/des Drucklacks bei/nach dem Drucken verhindert. Es entstehen keine Spaltprodukte (durch oxidative Spaltung von Mehrfachbindungen), die zu dem Verpackungsgut, welches in einer entsprechend bedruckten Verpackung aufgenommen ist, migrieren können. Solche Spaltprodukte können prinzipiell auch in die Gasphase gehen und eine Geruchsbeeinträchtigung und Swelling hervorrufen. Bei der erfindungsgemäßen Lösung sind sie weitgehend verhindert.

Wenn der Lösungsmittelbestandteil aus einem zugelassenen Lebensmittel besteht (einkomponentig oder mehrkomponentig) bzw. einem einkomponentigen oder mehrkomponentigen zugelassenen Lebensmittel-Zusatzstoff, dann ist eine Migration von Lösungsmittelbestandteilen in das Lebensmittel nicht schädlich. Wenn das Lebensmittel bzw. der Lebensmittel-Zusatzstoff sensorisch neutral gewählt wird, dann erfolgt keine Qualitätsverschlechterung des Lebensmittels, welches in der mit der entsprechenden Druckfarbe bzw. dem entsprechenden Drucklack bedruckten Lebensmittel-Verpackung aufgenommen ist.

Ein Lebensmittel ist nach § 2, Abs. 2 des Lebensmittel- und Futtermittelgesetzbuches definiert als Lebensmittel im Sinne des Artikels 2 der Verordnung (EG) Nr. 178/2002. Gemäß der letztgenannten Verordnung sind Lebensmittel alle Stoffe oder Erzeugnisse, die dazu bestimmt sind oder von denen nach vernünftigem Ermessen erwartet werden kann, dass sie in verarbeitetem, teilweise verarbeitetem oder unverarbeitetem Zustand von Menschen aufgenommen werden.

Gemäß § 2, Abs. 3 des Lebensmittel- und Futtermittelgesetzbuches sind Lebensmittel-Zusatzstoffe Stoffe mit oder ohne Nährwert, die in der Regel weder selbst als Lebensmittel verzehrt noch als charakteristische Zutat eines Lebensmittels verwendet werden und die einem Lebensmittel aus technologischen Gründen beim Herstellen oder Behandeln zugesetzt werden, wodurch sie selbst oder ihre Abbau- oder Reaktionsprodukte mittelbar oder unmittelbar zu einem Bestandteil des Lebensmittels werden oder werden können.

Durch die erfindungsgemäße Lösung werden Druckfarben/Drucklacke bereitgestellt, welche sich einfach verarbeiten lassen. Eine Überlackierung ist nicht unbedingt notwendig. Eine schädliche Kontaminierung von Lebensmitteln findet nicht statt, da das Kontaminierungsprodukt selber ein Lebensmittel bzw. zugelassener Lebensmittel-Zusatzstoff ist. Es ist deshalb auch in gewissem Maße eine Migration zugelassen. Dadurch kann die Druckfarbe/der Drucklack durch Wegschlagen trocknen.

Die erfindungsgemäßen Druckfarben/Drucklacke sind beispielsweise als Offset-Druckfarben/Drucklacke und insbesondere als Bogenoffset-Druckfarben/ Drucklacke realisiert.

Insbesondere findet bei der erfindungsgemäßen Druckfarbe und dem erfindungsgemäßen Drucklack keine Vernetzung der chemischen Bestandteile statt. Es werden dann keine Doppelbindungen in dem Lösungsmittel und/oder dem Harz benötigt, die zur Verfilmung führen. Bei bekannten Druckfarben, die oxidativ trocknen, verfilmen Harz und/oder Lösungsmittelöl aufgrund von Doppelbindungen unter Aufnahme von Luftsauerstoff initiiert durch Metallkomponenten wie beispielsweise Kobaltsalze und/oder Mangansalze. Wie in der DE 102 09 013 A1 beschrieben, kann eine Filmbildung anstatt über oxidative Trocknung auch durch den Einsatz mindestens einer epoxidierten Komponente erreicht werden, wobei die Öffnung der mindestens einen epoxidierten Komponente die Filmbildung und damit die Vernetzung bewirkt.

Bei der erfindungsgemäßen Lösung findet keine Filmbildung (Vernetzung) statt. Entsprechend müssen auch keine Metallionen als Trockner verwendet werden.

Es hat sich als günstig erwiesen, wenn das Lösungsmittel (wenn es einkomponentig ist) oder die Komponenten des Lösungsmittels durch Kohlenstoffverbindungen mit mittelkettigen Fettsäuren gebildet sind. Dadurch lässt sich ein Lösungsmittel bereitstellen, welches bei den üblichen Bedingungen für Druckfarben/Drucklacke flüssig ist.

Insbesondere umfasst eine Kohlenstoffkette des Lösungsmittels bzw. der Komponenten des Lösungsmittels zwischen 6 und 12 Kohlenstoffatome.

Die Lösungsmittelbestandteile des Firnis umfassen Diglyceride (Diacylglycerine). Die entsprechenden Stoffe sind als Lebensmittel zugelassen. Sie können dabei einkomponentig das Lösungsmittel bilden oder in einer Mischung das Lösungsmittel bilden. Entsprechende Fettsäuren (Acylreste) dieser Lösungsmittelbestandteile umfassen insbesondere Fettsäuren (Acylreste), welche eine Kohlenstoffkettenlänge zwischen 6 und 12 aufweisen.

C₂- bis C₂₄-aliphatische, geradkettige Monokarbonsäuren (aus natürlichen Fetten und synthetischen Ursprungs) und deren Diglycerinester sind gemäß der EU-Kunststoff-Richtlinie 2002/72/EG als Additive ohne Beschränkung zugelassen. Die Bedruckung einer Lebensmittelverpackung oder einer Kontakteinrichtung mit einer entsprechenden Druckfarbe bzw. einem entsprechenden Drucklack ist konform mit den Anforderungen, wie sie in Artikel 3 der EU-Verordnung Nr. 1935/2004 für Lebensmittelbedarfsgegenstände enthalten sind.

Ganz besonders vorteilhaft ist es, wenn der Lösungsmittelbestandteil des Bindemittels im Wesentlichen mehrfachbindungsfrei und insbesondere doppelbindungsfrei ist. Dadurch werden im Wesentlichen oxidative Spaltprodukte verhindert. Dadurch wiederum wird der migrationsfähige Anteil der Druckfarbe/des Drucklacks aus Spaltproduktion gering gehalten. Weiterhin erhält man dadurch auch eine geruchsarme und swellingarme Druckfarbe bzw. einen swellingarmen Drucklack. Das Ausmaß des Swelling hängt von der Größe der Moleküle des eingesetzten Lösungsmittels ab.

Insbesondere hat das Lösungsmittel (wenn es einkomponentig ist) oder haben die Komponenten des Lösungsmittels eine Jodzahl kleiner 10 und vorzugsweise kleiner als 1, um oxidative Spaltprodukte gering zu halten. Besonders bevorzugt ist die Jodzahl kleiner 0,4.

Es hat sich ferner als günstig erwiesen, wenn die Moleküle des Lösungsmittels oder der Komponenten des Lösungsmittels ein Molekulargewicht kleiner 1000 Dalton haben. Dadurch ergibt sich eine verbesserte Druckbarkeit der entsprechenden Druckfarbe/des Drucklacks.

Es kann günstig sein, wenn der Lösungsmittelbestandteil des Bindemittels eine Mischung von mehreren Substanzen (welche jeweils ein Lebensmittel oder zugelassener Lebensmittel-Zusatzstoff sind) ist. Es lassen sich dadurch Eigenschaften der Druckfarbe/des Drucklacks durch entsprechende Auswahl der Mischungsbestandteile einstellen.

Es hat sich als günstig erwiesen, wenn der Gewichtsanteil des Bindemittels bei einer Druckfarbe zwischen 50 % und 80 % liegt. Dadurch ergibt sich eine gute Verdruckbarkeit mit gutem Druckergebnis. Bei einem Drucklack kann der Bindemittelanteil höher liegen.

Eine Druckfarbe umfasst Pigmente. Der Gewichtsanteil der Pigmente kann bei bis zu 35 % liegen.

Es kann vorgesehen sein, dass die Druckfarbe/der Drucklack ein oder mehrere Alkydharze umfasst. Durch das Alkydharz lassen sich Pigmente benetzen. Diese lassen sich im Bindemittel besser verteilen und man erhält einen hohen Glanz im Druckergebnis. (Hier wird das Alkydharz als von dem Bindemittel getrennter Bestandteil angesehen; die entsprechenden Gewichtsangaben beziehen sich darauf, dass das Bindemittel kein Alkydharz enthält. Man kann jedoch das Alkydharz auch dem Bindemittel zuordnen.)

Insbesondere liegt der Gewichtsanteil des Alkydharzes unterhalb von 15 %. Beispielsweise liegt er unterhalb von 10 %.

Es kann vorgesehen sein, dass die Druckfarbe/der Drucklack Druckhilfsmittel wie beispielsweise Scheuerschutzpaste umfasst.

Günstig ist es, wenn der Gewichtsanteil des Lösungsmittelbestandteils höchstens 45 % beträgt. Der Lösungsmittelbestandteil ist insbesondere bei nicht aufgehellten Farben kleiner als 45 %. Er kann beispielsweise unterhalb von 40 % liegen.

Günstigerweise trocknet die erfindungsgemäße Druckfarbe/der erfindungsgemäße Drucklack durch Wegschlagen, ohne dass eine Überlackierung notwendig ist.

Der Lösungsmittelbestandteil ist insbesondere flüssig.

Vorteilhafterweise vernetzt eine erfindungsgemäße Druckfarbe bzw. ein erfindungsgemäßer Drucklack nicht, d. h. es gibt auch keine Filmbildung aufgrund von Vernetzung. Dadurch muss auch keine "Vernetzungskomponenten" mit Doppelbindungen bzw. mit mindestens einer epoxidierten Komponente vorgesehen werden.

Insbesondere weist eine erfindungsgemäße Druckfarbe bzw. ein erfindungsgemäßer Drucklack keine epoxidierten Komponenten auf. Epoxidierte Komponenten könnten grundsätzlich in Lebensmittel migrieren. Wenn keine epoxidierte Komponente verwendet wird, dann kann die Herstellung vereinfacht sein, da bei der Herstellung des Bindemittels keine Abkühlung notwendig ist. Bei Druckfarben mit epoxidierten Komponenten kann vor der Zumischung des Epoxids eine Abkühlung aufgrund der Reaktivität des Epoxids notwendig sein.

Die erfindungsgemäße Druckfarbe bzw. der erfindungsgemäße Drucklack sind ferner frei von als Trockner wirksamen Metallionen. Metallionen kommen bei aus dem Stand der Technik bekannten Druckfarben als Trockner zum Einsatz.

Vorteilhafterweise sind die erfindungsgemäße Druckfarbe bzw. der erfindungsgemäße Drucklack frei von Mineralölen. Mineralöle sind unerwünscht im Zusammenhang mit Lebensmitteln.

Eine erfindungsgemäße Druckfarbe bzw. ein erfindungsgemäßer Drucklack lässt sich auf vorteilhafte Weise für eine Lebensmittel-Verpackung oder eine Kontakteinrichtung, welche in Kontakt und insbesondere Direktkontakt mit Lebensmitteln kommen kann, verwenden.

Die erfindungsgemäße Druckfarbe/der Drucklack ist insbesondere eine Offset-Druckfarbe/Drucklack, welche sich für den Offset-Druck und insbesondere für den Bogenoffset-Druck verwenden lässt.

Bei einem konkreten Ausführungsbeispiel einer Druckfarbe wird zunächst ein Bindemittel oder ein Ausgangsbindemittel hergestellt. Dazu wird der Harzbestandteil im Lösungsmittelbestandteil unter Erhitzung gelöst. Eine typische Temperatur liegt dabei in der Größenordnung von 200°C. Das Lösen erfolgt unter Rühren. Es kann zusätzlich auch eine Schutzgasatmosphäre mit einem Inertgas vorgesehen sein.

In das hergestellte Bindemittel oder Ausgangsbindemittel werden Pigmente eingewogen. Gegebenenfalls wird Alkydharz zugegeben. In einem Dissolver erfolgt durch mechanische Einwirkung beispielsweise mit Rührscheiben eine Vordispersion. Das Feindispergieren erfolgt nachträglich beispielsweise in einem Dreiwalzwerk.

Zu dem Ausgangsbindemittel kann anschließend gegebenenfalls weiteres Lösungsmittel hinzugegeben werden, um die Rheologie der Druckfarbe einzustellen. Dieses zugegebene Lösungsmittel kann als Bestandteil des Bindemittels angesehen werden.

In einem ersten konkreten Referenzbeispiel wurde eine Druckfarbe Blau hergestellt.

Es wurde ein wie folgt zusammengesetztes Ausgangsbindemittel hergestellt:

| | | | |
|---|---|---|---|
| Maleinatharz | Tertac 170 | Cray Valley | 43,5 % |
| Glycerintricaprin/capronsäureester | Radiamuls MCT 7104 | Oleon | 56,5 % |

Mit diesem Ausgangsbindemittel wurde dann die Druckfarbe mit folgender Zusammensetzung hergestellt:

| | | | |
|---|---|---|---|
| Ausgangsbindemittel | | | 59,6 % |
| Weichharz (Alkydharz) | Trionol 2088 | Hexion | 11,5% |
| Glycerintricaprin/capronsäureester (Lösungsmittel) | Radiamuls MCT 7104 | Oleon | 6,6 % |
| Kieselsäure | Aerosil 300 | Degussa | 3,0 % |
| Calciumcarbonat | Omyalite 95 T | Omya | 2,0 % |
| Irgalite Blau NGA (Pigmente) | PB 15:3 | Ciba | 17,0 % |
| Reisstärkepuder | | REMY | 0,3 % |

Der Lösungsmittelanteil in dieser hergestellten Druckfarbe beträgt 40,3 Gewichtsprozent.

Eine Druckfarbe Rot wurde wie folgt hergestellt:

Zunächst wurde ein Ausgangsbindemittel hergestellt mit folgender Zusammensetzung:

| | | | |
|---|---|---|---|
| Maleinatharz | Tertac 170 | Cray Valley | 50,0% |
| Acetyliertes Mono-/Diglycerid (E 472a) | Radiamuls 2134 | Oleon | 50,0 % |

Mit diesem Ausgangsbindemittel wurde dann die Druckfarbe mit folgender Zusammensetzung hergestellt:

| | | | |
|---|---|---|---|
| Ausgangsbindemittel | | | 55,2 % |
| Weichharz (Alkydharz) | Trionol 2088 | Hexion | 12,5% |
| Acetyliertes Mono-/Diglycerid (E 472a) (Lösungsmittel) | Radiamuls 2134 | Oleon | 10,0 % |
| Kieselsäure | Aerosil 300 | Degussa | 3,0 % |
| Calciumcarbonat | Omyalite 95 T | Omya | 2,0 % |
| Symuler Brillant Carmine 6B 306 (Pigmente) | PR 57:1 | DIC | 17,0 % |
| Reisstärkepuder | | REMY | 0,3 % |

Der Lösungsmittelanteil in dieser Druckfarbe beträgt 37,6 Gewichtsprozent.

Mit den hergestellten Druckfarben wurden Wegschlagtests durchgeführt. Es wurde dabei ein bedruckter Probeandruck mit einem Konterstreifen bedeckt und manuell durch einen Walzenspalt geführt. Auf den Papierstreifen wirkt dabei eine Kraft von 300 N. Alle 30 Sekunden wird der Walzenkegel jeweils um ca. 72° gedreht. Schlägt die Farbe auf dem Probenandruck weg, so geht mit zunehmender Zeit weniger Farbe auf den Konterstreifen über. Die Probenandrucke dieser Druckfarben wurden mit der eingangs erwähnten Druckfarbe "MGA-CORONA^{®} 5045" der huber group verglichen sowie mit der Druckfarbe "Öko Speed 210" der Epple Druckfarben AG. Diese Versuche haben ergeben, dass die erfindungsgemäßen Druckfarben schnell wegschlagen. Die Druckfarbe "Öko Speed 210" weist ein als sehr schnell klassifiziertes Wegschlagverhalten auf. Die erfindungsgemäßen Druckfarben schlagen sogar noch schneller weg als "Öko Speed 210". Die untersuchten Druckfarben "MGA-CORONA^{®} 5045" weisen dagegen praktisch kein Wegschlagen auf.

Bei einem Drucklack wird in der Regel das Bindemittel gleich hergestellt wie bei einer Druckfarbe. Ein Drucklack kann als Druckfarbe ohne Pigmentanteil angesehen werden. In das Bindemittel des Drucklacks werden gegebenenfalls noch Zusatzstoffe eingemischt.

Zu Testzwecken wurde eine weitere Druckfarbe unter der Bezeichnung E-29099 mit folgender Zusammensetzung hergestellt:

| | | | |
|---|---|---|---|
| Maleinatharz | Tertac 170 | Cray Valley | 25,9 % |
| MCT-Öl | Rofacer GTCC | Ecogreen | 41,1% |
| Weichharz | Trionol 2088 | Hexion | 12 % |
| Reisstärkepuder | | REMY | 0,3 % |
| Kieselsäure | Aerosil 300 | Degussa | 2,3 % |
| Calciumcarbonat | Omyalite 95T | Omya | 1 % |
| Pigment P.Y.13 | Irgalith Gelb LBIW | Ciba | 3 % |
| Pigment P.R.57.1 | Symuler Bill. Carmine | Sun Chemical | 4,4 % |
| Pigment P.B. 15.3 | Irgalith Blau NGA | Ciba | 4,5 % |
| Pigment P.Bl.7 | Printex 35 | Degussa (Evionik) | 5,5 % |

Es wurden Druckfarben mit den Grundfarben Gelb, Magenta, Cyan und Schwarz individuell hergestellt und dann wurden diese vier Druckfarbensorten für die Testverfahren zu gleichen Anteilen zusammengemischt.

Mit der so zusammengemischten Druckfarbe (mit dem Farbton Braun) wurde ein Testdruck erzeugt und an diesem wurde eine Migrationsprüfung durchgeführt. Der Testdruck wurde für zehn Tage bei einer Temperatur von 40°C gelagert. Modifiziertes Polyvenylenoxid unter dem Markennamen "TENAX" wurde dabei als Simulanz für ein trockenes Lebensmittel bei Langzeitlagerung bei Raumtemperatur eingesetzt. Dieses Simulanz ist in der EU-Richtlinie "Grundregeln der Migrationsprüfung" 97/48/EG festgelegt.

Durch eine Screening-Analyse mittels GC-FID bzw. GC-MS konnte der Übergang von Tricaprylglycerid und weiteren Triglyceriden mit C₈-, C₁₀- und C₁₂-Fettsäuremustern aus der (zusammengemischten) Druckfarbe E-29099 auf das Lebensmittelsimulanz detektiert werden.

Die Gesamtmigration ist konform mit einem Grenzwert 10 mg/dm² gemäß EU-Kunststoffrichtlinie 2002/72/EG.

Die Gesamtmigration ergab 60 ppm oder weniger.

## Patentansprüche

1. Druckfarbe oder Drucklack für Lebensmittel-Verpackungen oder Kontakteinrichtungen, welche in Kontakt mit Lebensmitteln kommen können, umfassend ein Bindemittel, welches mindestens ein Harz und mindestens ein Lösungsmittel für das mindestens eine Harz umfasst,
**dadurch gekennzeichnet, dass** das mindestens eine Lösungsmittel gesättigt ist und ein Diglycerid umfasst, welches ein Lebensmittel im Sinne des Artikels 2 der Verordnung (EG) Nr. 178/2002 oder ein Lebensmittel-Zusatzstoff gemäß § 2 Abs. 3 des Lebensmittel- und Futtermittelgesetzbuches ist.

2. Druckfarbe oder Drucklack nach Anspruch 1, **dadurch gekennzeichnet, dass** das mindestens eine Lösungsmittel durch Kohlenstoffverbindungen mit mittelkettigen Fettsäuren gebildet ist, und insbesondere dass eine Kohlenstoffkette einer Fettsäure zwischen sechs und zwölf Kohlenstoffatome umfasst.

3. Druckfarbe oder Drucklack nach einem der vorangehenden Ansprüche, **dadurch gekennzeichnet, dass** das mindestens eine Lösungsmittel im Wesentlichen mehrfachbindungsfrei ist, und insbesondere dass das mindestens eine Lösungsmittel eine Jodzahl kleiner 10 hat, und insbesondere dass das mindestens eine Lösungsmittel eine Jodzahl kleiner 1 hat.

4. Druckfarbe oder Drucklack nach einem der vorangehenden Ansprüche, **dadurch gekennzeichnet, dass** die Moleküle des mindestens einen Lösungsmittels ein Molekulargewicht kleiner 1000 Dalton haben.

5. Druckfarbe oder Drucklack nach einem der vorangehenden Ansprüche, **dadurch gekennzeichnet, dass** das mindestens eine Lösungsmittel eine Mischung von mehreren Substanzen ist.

6. Druckfarbe nach einem der vorangehenden Ansprüche, **dadurch gekennzeichnet, dass** der Gewichtsanteil des Bindemittels zwischen 50% und 80% liegt.

7. Druckfarbe nach einem der vorangehenden Ansprüche, **gekennzeichnet durch** einen Pigmentanteil, und insbesondere dass der Gewichtsanteil der Pigmente bei bis zu 35% liegt.

8. Druckfarbe oder Drucklack nach einem der vorangehenden Ansprüche, **dadurch gekennzeichnet, dass** die Druckfarbe oder der Drucklack ein oder mehrere Alkydharze umfasst, und insbesondere dass der Gewichtsanteil von Alkydharz unterhalb von 15% liegt.

9. Druckfarbe oder Drucklack nach einem der vorangehenden Ansprüche, **dadurch gekennzeichnet, dass** der Gewichtsanteil das mindestens einen Lösungsmittels der Druckfarbe oder des Drucklacks höchstens 45% beträgt.

10. Druckfarbe oder Drucklack nach einem der vorangehenden Ansprüche, welche durch Wegschlagen trocknet.

11. Druckfarbe oder Drucklack nach einem der vorangehenden Ansprüche, **dadurch gekennzeichnet, dass** das mindestens eine Lösungsmittel flüssig ist.

12. Druckfarbe oder Drucklack nach einem der vorangehenden Ansprüche, **gekennzeichnet durch** die Nichtanwesenheit von epoxidierten Komponenten und/oder **durch** die Nichtanwesenheit von als Trockner wirksamen Metallionen und/oder **durch** die Nichtanwesenheit von Mineralölen.

13. Verwendung der Druckfarbe oder des Drucklacks gemäß einem der vorangehenden Ansprüche für eine Lebensmittel-Verpackung oder eine Kontakteinrichtung, welche in Kontakt mit Lebensmitteln kommen kann und/oder Verwendung der Druckfarbe oder des Drucklacks gemäß einem der vorangehenden Ansprüche für den Offset-Druck.

## Claims

1. Printing ink or printing varnish for food packagings or contact devices which can come into contact with foods, comprising a binding agent which comprises at least one resin and at least one solvent for the at least one resin,
**characterized in that** the at least one solvent is saturated and comprises a diglyceride which is a food within the meaning of Article 2 of the Regulation (EG) No. 178/2002 or a food additive according to § 2 paragraph 3 of the Food and Feedstuff Law.

2. Printing ink or printing varnish as defined in claim 1, **characterized in that** the at least one solvent is formed by carbon compounds with middle chain fatty acids, and in particular that a carbon chain of a fatty acid comprises between six and twelve carbon atoms.

3. Printing ink or printing varnish as defined in any one of the preceding claims, **characterized in that** the at least one solvent is essentially free from multiple bonds, and in particular that the at least one solvent has an iodine number smaller than 10, and in particular that the at least one solvent has an iodine number smaller than 1.

4. Printing ink or printing varnish as defined in any one of the preceding claims, **characterized in that** the molecules of the at least one solvent have a molecular weight of less than 1.000 daltons.

5. Printing ink or printing varnish as defined in any one of the preceding claims, **characterized in that** the at least one solvent is a mixture of several substances.

6. Printing ink as defined in any one of the preceding claims, **characterized in that** the weight content of the binding agent is between 50 % and 80 %.

7. Printing ink as defined in any one of the preceding claims, **characterized by** a proportion of pigments, and in particular that the weight content of the pigments is up to 35 %.

8. Printing ink or printing varnish as defined in any one of the preceding claims, **characterized in that** the printing ink or the printing varnish comprises one or more alkyd resins, and in particular that the weight content of alkyd resin is below 15 %.

9. Printing ink or printing varnish as defined in any one of the preceding claims, **characterized in that** the weight content of the at least one solvent of the printing ink or of the printing varnish is at the most 45 %.

10. Printing ink or printing varnish as defined in any one of the preceding claims, which is dried by way of ink absorption.

11. Printing ink or printing varnish as defined in any one of the preceding claims, **characterized in that** the at least one solvent is liquid.

12. Printing ink or printing varnish as defined in any one of the preceding claims, **characterized by** the absence of epoxidized components, and/or by the absence of metallic ions acting as drying agents, and/or by the absence of mineral oils.

13. Use of the printing ink or the printing varnish according to any one of the preceding claims for a food packaging or a contact device which can come into contact with foods, and/or use of the printing ink or the printing varnish according to any one of the preceding claims for offset printing.

## Revendications

1. Encre ou laque d'impression pour des emballages de produits alimentaires ou pour des dispositifs de contact, qui peuvent entrer en contact avec des produits alimentaires, comprenant un liant qui comprend au moins une résine et au moins un solvant pour l'au moins une résine, **caractérisée en ce que** l'au moins un solvant est saturé et comprend un diglycéride, qui est un aliment dans le sens d'Article 2 du Règlement (CE) no. 178/2002 ou un additif alimentaire selon §2 paragraphe 3 du Code sur les aliments et les matières fourragères.

2. Encre ou laque d'impression selon la revendication 1, **caractérisée en ce que** l'au moins un solvant est formé par liaisons carbonées avec des acides gras à chaînes moyennes, et en particulier **en ce qu'**une chaîne carbonée d'un acide gras comprend entre six et douze atomes de carbone.

3. Encre ou laque d'impression selon l'une des revendications précédentes, **caractérisée en ce que** l'au moins un solvant est sensiblement dépourvu de liaisons multiples, et en particulier **en ce que** l'au moins un solvant présente un indice d'iode inférieur à 10, et en particulier **en ce que** l'au moins un solvant présente un indice d'iode inférieur à 1.

4. Encre ou laque d'impression selon l'une des revendications précédentes, **caractérisée en ce que** les molécules du au moins un solvant ont un poids moléculaire inférieur à 1000 Daltons.

5. Encre ou laque d'impression selon l'une des revendications précédentes, **caractérisée en ce que** l'au moins un solvant est un mélange de plusieurs substances.

6. Encre d'impression selon l'une des revendications précédentes, **caractérisée en ce que** la proportion en poids du liant se situe entre 50 % et 80 %.

7. Encre d'impression selon l'une des revendications précédentes, **caractérisée par** une proportion en pigments, et en particulier en ce que la proportion en poids des pigments va jusqu'à 35 %.

8. Encre ou laque d'impression selon l'une des revendications précédentes, **caractérisée en ce que** l'encre ou la laque d'impression comprend une ou plusieurs résines d'alkyde, et en particulier **en ce que** la proportion en poids de résine d'alkyde est inférieure à 15 %.

9. Encre ou laque d'impression selon l'une des revendications précédentes, **caractérisée en ce que** la proportion en poids du au moins un solvant de l'encre ou de la laque d'impression est au maximum de 45 %.

10. Encre ou laque d'impression selon l'une des revendications précédentes, qui sèche par pénétration.

11. Encre ou laque d'impression selon l'une des revendications précédentes, **caractérisée en ce que** l'au moins un solvant est liquide.

12. Encre ou laque d'impression selon l'une des revendications précédentes, **caractérisée par** l'absence de composants époxydés et/ou par l'absence d'ions métalliques efficaces comme agents de séchage et/ou par l'absence d'huiles minérales.

13. Utilisation de l'encre ou de la laque d'impression selon l'une des revendications précédentes pour un emballage de produits alimentaires ou pour des dispositifs de contact, qui peuvent entrer en contact avec des produits alimentaires et/ou utilisation de l'encre d'impression ou de la laque d'impression selon l'une des revendications précédentes pour l'impression offset.
